# EUROPEAN PATENT APPLICATION

(11) **EP 4 549 487 A1**
(43) Date of publication of application: **07.05.2025**
(21) Application number: 23901090.3
(22) Date of filing: 06.12.2023
(51) Int. Cl.: C08G 63/66, C08G 63/85, C08G 65/34, C08L 67/02

(54) **COPOLYMER AND METHOD FOR PRODUCING COPOLYMER**

(30) Priority: 06.12.2022 KR 20220168707
(71) Applicant: LG Chem, Ltd., Yeongdeungpo-gu Seoul 07336 (KR)
(72) Inventor: PARK, Sai Bom, Daejeon 34122 (KR); PARK, Hyungil, Daejeon 34122 (KR); KANG, Donggyun, Daejeon 34122 (KR); KIM, Chul Woong, Daejeon 34122 (KR); LEE, Hokeun, Daejeon 34122 (KR)
(74) Representative: Plasseraud IP
(86) International application number: PCT/KR2023/019983
(87) International publication number: WO 2024/123072

(57) **Abstract**

The present invention relates to a copolymer having excellent mechanical properties along with environmental affinity and biodegradability, and a preparation method of the copolymer.

## Description

### [TECHNICAL FIELD]

### CROSS-REFERENCE TO RELATED APPLICATION(S)

This application claims the benefit of Korean Patent Application No. 10-2022-0168707 filed on December 6, 2022 and Korean Patent Application No. 10-2023-0175226 filed on December 6, 2023 in the Korean Intellectual Property Office, the disclosures of which are incorporated herein by reference in their entirety.

The present invention relates to a copolymer and a preparation method of the copolymer.

### [BACKGROUND]

Polylglycolic acid (PGA) is a type of aliphatic polyester, and is attracting attention as an environmentally friendly material that has biodegradability and also has excellent tensile strength and elastic modulus.

Unlike petroleum-based resins such as polystyrene resin, polyvinyl chloride resin, and polyethylene, which are conventionally used, polylactic acid has effects such as preventing depletion of petroleum resources and suppressing carbon dioxide emissions, and therefore can reduce environmental pollution, which is a drawback of petroleum-based plastic products. Therefore, as the problem of environmental pollution caused by waste plastics has emerged as social issues, attempts are being made to expand the scope of application to products where general plastics (petroleum-based resins) have been used, such as food packaging materials, containers, and electronic product cases.

However, compared to conventional petroleum-based resins, polylglycolic acid is poor in elongation at break characteristics and exhibits brittleness, which limits its processability and limits its use as a general-purpose resin.

Accordingly, research is needed on copolymers that maintain the mechanical properties of polyglycolic acid while improving elongation properties, etc.

### [DETAILED DESCRIPTION OF THE INVENTION]

### [Technical Problem]

It is an object of the present invention to provide a copolymer having excellent biodegradability and improved elongation while maintaining the excellent mechanical properties inherent to polyglycolic acid, and a preparation method of the copolymer.

### [Technical Solution]

According to one embodiment of the present invention, there is provided a copolymer comprising a repeating unit represented by the following Chemical Formula 1, a repeating unit represented by the following Chemical Formula 2, and a repeating unit represented by the following Chemical Formula 3, wherein the repeating unit represented by Chemical Formula 2 is contained in an amount of 0.9 mole or less based on 1 mole of the repeating unit represented by Chemical Formula 3: 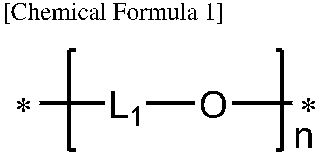 wherein, in Chemical Formula 1, L₁ is an alkylene group having 4 or more carbon atoms, and n is an integer of 5 or more, 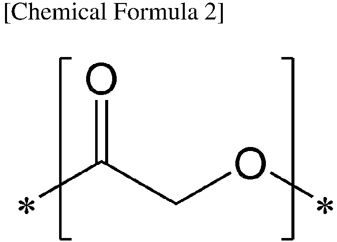 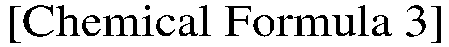 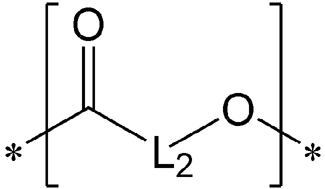 wherein, in Chemical Formula 3, L₂ is an alkylene group having 2 or more carbon atoms.

According to another embodiment of the present invention, there is provided a method for preparing a copolymer, the method comprising subjecting a glycolide monomer and a monomer represented by the following Chemical Formula 5 to ring-opening polymerization in the presence of a compound represented by the following Chemical Formula 4 to prepare a copolymer, wherein the glycolide monomer is contained in an amount of 0.9 mole or less based on 1 mole of the repeating unit represented by Chemical Formula 5: 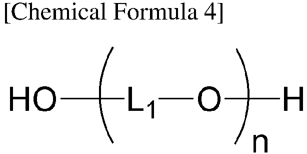 wherein, in Chemical Formula 4, L₁ is an alkylene group having 4 or more carbon atoms, and n is an integer of 5 or more, 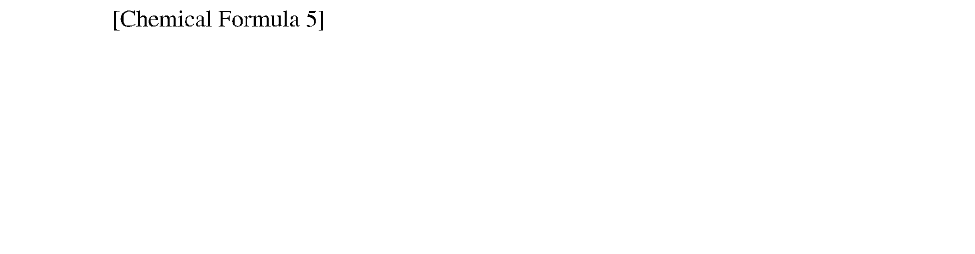 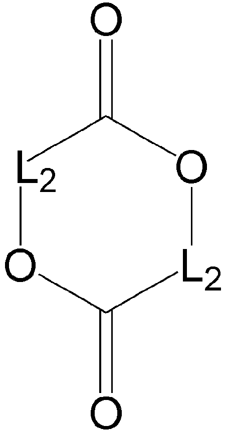 wherein, in Chemical Formula 5, L₂ is an alkylene group having 2 or more carbon atoms.

Now, a copolymer and a preparation method of the copolymer according to specific embodiments of the invention will be described in more detail.

Unless particularly mentioned herein, the term "including" or "comprising" refers to including some element (or component) without any limitation, and should not be construed as excluding addition of other elements (or components).

The terms "first," "second," etc. are used herein to explain various elements, and these terms are only used to distinguish one constitutional element from the other constitutional elements.

Further, if the steps constituting the manufacturing method described herein are specified as being sequential or continuous, or unless otherwise specified, one step and other steps constituting one manufacturing method shall not be construed as limited to the order described herein. Therefore, the order of the steps constituting the manufacturing method can be changed within a range that can be easily understood by a person skilled in the art, and in this case, the accompanying changes that are obvious to a person skilled in the art are not included in the scope of the present invention.

Further, unless otherwise stated herein, the weight average molecular weight can be measured using a gel permeation chromatography(GPC). Specifically, the polyester is dissolved in chloroform to a concentration of 2 mg/ml, then 20 *µ*ℓ of the dissolved solution is injected into GPC, and GPC analysis is carried out at 40°C. At this time, chloroform is used as the mobile phase for GPC, the flow rate is 1.0 mL/min, and the column used is two Agilent Mixed-B units connected in series. RI Detector is used as a detector. The values of Mw is obtained using a calibration curve formed using a polystyrene standard sample. Nine kinds of the polystyrene standard samples are used with the molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

As used herein, the copolymer refers to including a random copolymer, a block copolymer, a graft copolymer, and the like.

As used herein, the term "block" refers to a polymer including at least two repeating units linked to each other, wherein the repeating units are the same. The term "block copolymer" refers to a copolymer including at least two types of different blocks linked to each other via a direct bond or via a linking group, wherein one or more blocks are present per each block type.

According to one embodiment of the invention, there is provided a copolymer comprising a repeating unit represented by Chemical Formula 1, a repeating unit represented by Chemical Formula 2, and a repeating unit represented by Chemical Formula 3, wherein the repeating unit represented by Chemical Formula 2 is contained in an amount of 0.9 mole or less based on 1 mole of the repeating unit represented by Chemical Formula 3.

The present inventors have found that as the copolymer of the above embodiment simultaneously includes a repeating unit represented by Chemical Formula 1 and a repeating unit represented by Chemical Formula 2, it is possible to simultaneously realize excellent mechanical properties and elongation, and completed the present invention.

Specifically, as the copolymer of the above embodiment simultaneously includes the repeating unit represented by Chemical Formula 1 and the repeating unit represented by Chemical Formula 2, it is possible to simultaneously achieve the excellent elongation exhibited by the repeating unit represented by Chemical Formula 1 and the excellent mechanical properties exhibited by the repeating unit represented by Chemical Formula 2.

The present inventors have also found that as the copolymer of the above embodiment contains 0.9 mole or less of the repeating unit represented by Chemical Formula 2 based on 1 mole of the repeating unit represented by Chemical Formula 3, it maintains excellent mechanical properties while improving elongation, and thus can simultaneously achieve excellent mechanical properties and elongation, and the completed the present invention.

Specifically, the copolymer of one embodiment may include a repeating unit represented by the following Chemical Formula 1, a repeating unit represented by the following Chemical Formula 2, and a repeating unit represented by the following Chemical Formula 3. 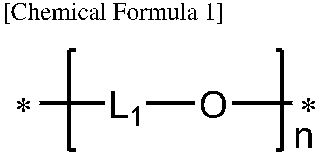 wherein, in Chemical Formula 1, L₁ is an alkylene group having 4 or more carbon atoms, and n is an integer of 5 or more, 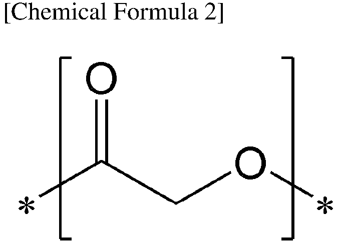 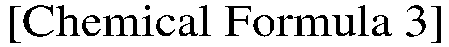 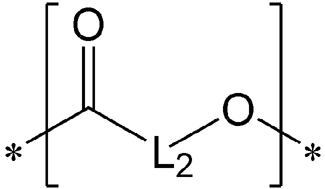 wherein, in Chemical Formula 3, L₂ is an alkylene group having 2 or more carbon atoms.

As a conventional copolymer does not contain the repeating unit represented by Chemical Formula 1, conventional general polymer processing methods such as thermoforming and film processing methods are impossible due to the high melting point and high crystallinity of copolymers, which causes a problem of limiting the processability. Unlike conventional copolymers, the copolymer according to one embodiment of the invention includes a repeating unit represented by Chemical Formula 1, and therefore has excellent low-temperature physical properties and stability against hydrolysis, and can also realize excellent elongation due to the low glass transition temperature.

The copolymer may include a random copolymer, a block copolymer, a graft copolymer, and the like. For example, the copolymer may be a block copolymer.

A copolymer according to an embodiment of the present invention includes a first block containing the repeating unit represented by Chemical Formula 1, a second block containing the repeating unit represented by Chemical Formula 2, and a third block containing the repeating unit represented by Chemical Formula 3, wherein the first block and the second block are directly bonded, ester-bonded, amide-bonded, urethane-bonded, or carbonate-bonded. Consequently, it is possible to compensate the disadvantage that biodegradable resins containing only polyglycolic acid have low elongation properties. In addition, these copolymers have excellent biodegradability while compensating the mechanical properties of each homopolymer.

That is, in the copolymer of the one embodiment, the repeating unit represented by Chemical Formula 1 and the repeating unit represented by Chemical Formula 2 may be linked by a direct bond, an ester bond, an amide bond, a urethane bond, a urea bond, or a carbonate bond.

Further, in the copolymer of the one embodiment, the repeating unit represented by Chemical Formula 2 and the repeating unit represented by Chemical Formula 3 may be linked by a direct bond, an ester bond, an amide bond, a urethane bond, a urea bond, or a carbonate bond.

In Chemical Formula 1, the L₁ may be an alkylene group having 4 or more carbon atoms, and the alkylene group may be substituted or unsubstituted.

Further, in Chemical Formula 1, n may be an integer of 5 or more and 5000 or less.

Specifically, in Chemical Formula 1, n may be an integer of 5 or more, 10 or more, or 5000 or less, 4000 or less, 3000 or less, 2000 or less, 1500 or less, 1000 or less, 500 or less, 100 or less, 50 or less, 40 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 40 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 40 or less.

In Chemical Formula 1, n may mean the number of repetitions in the repeating unit represented by Chemical Formula 1. In Chemical Formula 1, as n is an integer of 5 or more, sufficient elongation can be ensured in comparison with a case where n is less than 5.

Furthermore, n in Chemical Formula 1 being 5 or more can mean that the copolymer of the above embodiment includes a first block containing the repeating unit represented by Chemical Formula 1.

The repeating unit represented by Chemical Formula 1 may be a repeating unit derived from a compound represented by the following Chemical Formula 4. 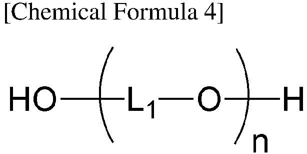 wherein, in Chemical Formula 4, L₁ is an alkylene group having 4 or more carbon atoms, and n is an integer of 5 or more,

Specifically, in Chemical Formula 4, L₁ may be an alkylene group having 4 or more carbon atoms, wherein the alkylene group may be substituted or unsubstituted.

Further, in Chemical Formula 4, n may be an integer of 5 or more and 5000 or less.

Specifically, in Chemical Formula 4, n may be an integer of 5 or more, 10 or more, or 5000 or less, 4000 or less, 3000 or less, 2000 or less, 1500 or less, 1000 or less, 500 or less, 100 or less, 50 or less, 40 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 40 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 40 or less.

Specifically, the repeating unit represented by Chemical Formula 1 may comprise a repeating unit represented by the following Chemical Formula 1-1: 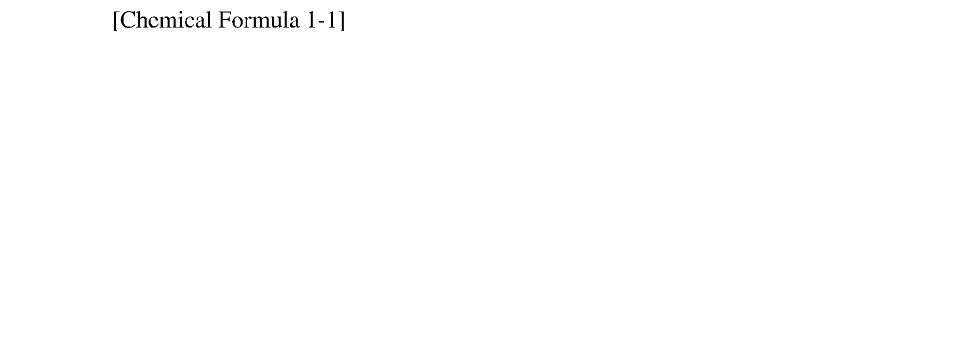 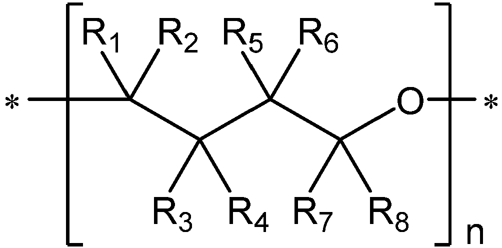 wherein, in Chemical Formula 1-1, R₁ to R₈ are each independently hydrogen or an alkyl group, and n is an integer of 5 or more.

In Chemical Formula 1-1, n may be an integer of 5 or more and 5000 or less.

Specifically, in Chemical Formula 1-1, n may be an integer of 5 or more, 10 or more, or 5000 or less, 4000 or less, 3000 or less, 2000 or less, 1500 or less, 1000 or less, 500 or less, 100 or less, 50 or less, 40 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 40 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 40 or less.

As the copolymer of the one embodiment includes a repeating unit represented by Chemical Formula 1-1, it has excellent low-temperature physical properties and stability against hydrolysis, and simultaneously allows high-temperature thermoforming, such as polymer processing method thermoforming and film processing method and thus can achieve excellent processability. In addition, the crystallinity is reduced due to the low glass transition temperature, thereby making it possible to achieve excellent elongation and excellent processability.

The copolymer of the above embodiment may include the repeating unit represented by Chemical Formula 1 in an amount of 5% by weight or more and 95% by weight or less based on the total repeating units.

As the copolymer of the above embodiment includes the repeating unit represented by Chemical Formula 1 in an amount of 5% by weight or more and 95% by weight or less based on the total repeating units, it is possible to maintain excellent mechanical properties and have improved elongation, which making it possible to simultaneously achieve excellent mechanical properties and elongation.

Specifically, the copolymer of the above embodiment may include the repeating unit represented by Chemical Formula 1 in an amount of 5% by weight or more, 10% by weight or more, 15% by weight or more, or 95% by weight or less, 90% by weight or less, 80% by weight or less, 75% by weight or less, 50% by weight or less, 5% by weight or more and 95% by weight or less, 5% by weight or more and 90% by weight or less, 5% by weight or more and 80% by weight or less, 5% by weight or more and 75% by weight or less, 5% by weight or more and 50% by weight or less, 10% by weight or more and 95% by weight or less, 10% by weight or more and 90% by weight or less, 10% by weight or more and 80% by weight or less, 10% by weight or more and 75% by weight or less, 10% by weight or more and 50% by weight or less, 15% by weight or more and 95% by weight or less, 15% by weight or more and 90% by weight or less, 15% by weight or more and 80% by weight or less, 15% by weight or more and 75% by weight or less, or 15% by weight or more and 50% by weight or less, based on the total repeating units,

As the copolymer of the above embodiment contains the repeating unit represented by Chemical Formula 1 in an amount of 5% by weight or more and 95% by weight or less based on the total repeating units, it is possible to simultaneously achieve excellent mechanical properties and elongation.

If the copolymer contains the repeating unit represented by Chemical Formula 1 in an amount of less than 5% by weight based on the total repeating units, the elongation is poor, which may thus limit the processability. If the repeating unit represented by Chemical Formula 1 is contained in an amount of more than 95% by weight based on the total repeating units, the mechanical properties may deteriorate.

Meanwhile, as the copolymer of the one embodiment includes a repeating unit represented by Chemical Formula 2, it is possible to achieve excellent mechanical properties.

The repeating unit represented by Chemical Formula 2 may be a repeating unit derived from a glycolide monomer.

When the compound represented by Chemical Formula 4 is introduced into a comonomer of the glycolide monomer, various physical properties of glycolide can be improved, but the physical properties may appear differently depending on the connection structure of each repeating unit and the degree to which each repeating unit is introduced. Therefore, the copolymer of the one embodiment can adjust mechanical properties while maintaining the physical properties inherent to glycolide by adjusting the connection structure of each repeating unit and the degree of introduction of the repeating unit represented by Chemical Formula 1.

The copolymer may include a repeating unit represented by the following Chemical Formula 7. 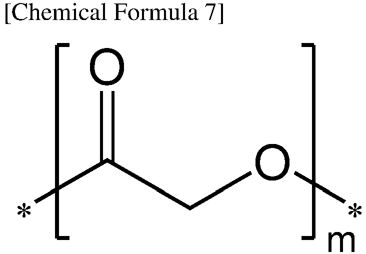 wherein, in Chemical Formula 7, m is an integer of 2 or more.

Including a repeating unit represented by Chemical Formula 7 where m is an integer of 2 or more may mean that the copolymer of the above embodiment includes a second block including the repeating unit represented by Chemical Formula 2.

The copolymer may include a repeating unit represented by the following Chemical Formula 3. 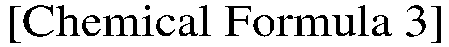 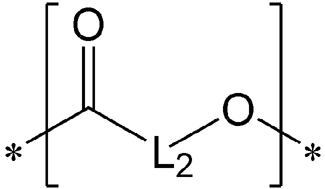 wherein, in Chemical Formula 3, L₂ is an alkylene group having 2 or more carbon atoms.

As the copolymer includes the repeating unit represented by Chemical Formula 3, the processability can be improved, the biodegradability rate can be adjusted, and analysis of the material can be facilitated.

The repeating unit represented by Chemical Formula 3 may be a repeating unit derived from a compound represented by the following Chemical Formula 5. 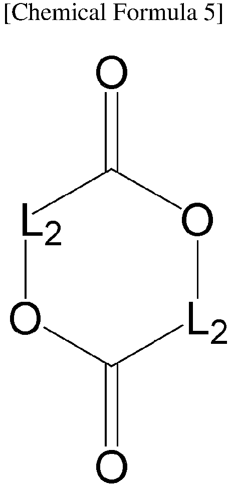 wherein, in Chemical Formula 5, L₂ is an alkylene group having 2 or more carbon atoms.

The copolymer including the repeating unit represented by Chemical Formula 3 can be prepared by subjecting the compound represented by Chemical Formula 4, glycolide, and the compound represented by Chemical Formula 5 to ring-opening polymerization.

Specifically, the repeating unit represented by Chemical Formula 3 may include a repeating unit represented by the following Chemical Formula 3-1.

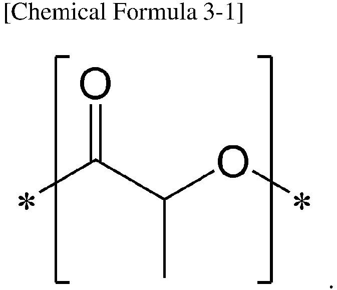

The repeating unit represented by Chemical Formula 3-1 may be a repeating unit derived from a lactide monomer.

The copolymer may include a repeating unit represented by the following Chemical Formula 8. 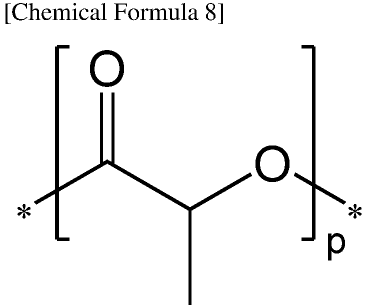 wherein, in Chemical Formula 8, p is an integer of 2 or more.

Including a repeating unit represented by Chemical Formula 8 where p is an integer of 2 or more may mean that the copolymer of the above embodiment includes a third block including the repeating unit represented by Chemical Formula 3.

Meanwhile, the copolymer may include the repeating unit represented by Chemical Formula 2 in an amount of 1.1 moles or more based on 1 mole of the repeating unit represented by Chemical Formula 1.

Specifically, the copolymer may contain the repeating unit represented by Chemical Formula 2 in an amount of 1.1 moles or more based on 1 mole of the repeating unit represented by Chemical Formula 1.

More specifically, the copolymer may contain a repeating unit represented by Chemical Formula 2 in an amount of 1.1 moles or more, 1.5 moles or more, 2 moles or more, 3 moles or more, 10 moles or more, 15 moles or more, 17 moles or more, 50 moles or less, 40 moles or less, 35 moles or less, 1.1 moles or more and 50 moles or less, 1.5 moles or more and 50 moles or less, 2 moles or more and 50 moles or less, 3 moles or more and 50 moles or less, 10 moles or more and 50 moles or less, 15 moles or more and 50 moles or less, 17 moles or more and 50 moles or less, 1.1 moles or more and 40 moles or less, 1.5 moles or more and 40 moles or less, 2 moles or more and 40 moles or less, 3 moles or more and 40 moles or less, 10 moles or more and 40 moles or less, 15 moles or more and 40 moles or less, 17 moles or more and 40 moles or less, 1.1 moles or more and 35 moles or less, 1.5 moles or more and 35 moles or less, 2 moles or more and 35 moles or less, 3 moles or more and 35 moles or less, 10 moles or more and 35 moles or less, 15 moles or more and 35 moles or less, or 17 moles or more and 35 moles or less, based on 1 mole of the repeating unit represented by Chemical Formula 1.

As the copolymer contains the repeating unit represented by Chemical Formula 2 in an amount of 1.1 moles or more based on 1 mole of the repeating unit represented by Chemical Formula 1, it is possible to achieve excellent mechanical properties.

If the copolymer contains the repeating unit represented by Chemical Formula 2 in an amount of less than 1.1 moles based on 1 mole of the repeating unit represented by Chemical Formula 1, the mechanical properties of the finally prepared copolymer may deteriorate.

Further, the copolymer may contain the repeating unit represented by Chemical Formula 2 in an amount of 0.9 mole or less based on 1 mole of the repeating unit represented by Chemical Formula 3.

Specifically, the copolymer may contain the repeating unit represented by Chemical Formula 2 in an amount of 0.1 mole or more, 0.15 mole or more, 0.16 mole or more, 0.9 mole or less, 0.8 mole or less, 0.75 mole or less, 0.5 mole or less, 0.4 mole or less, 0.1 mole or more and 0.9 mole or less, 0.1 mole or more and 0.8 mole or less, 0.1 mole or more and 0.75 mole or less, 0.1 mole or more and 0.5 mole or less, 0.1 mole or more and 0.4 mole or less, 0.15 mole or more and 0.9 mole or less, 0.15 mole or more and 0.8 mole or less, 0.15 mole or more and 0.75 mole or less, 0.15 mole or more and 0.5 mole or less, 0.15 mole or more and 0.4 mole or less, 0.16 mole or more and 0.9 mole or less, 0.16 mole or more and 0.8 mole or less, 0.16 mole or more and 0.75 mole or less, 0.16 mole or more and 0.5 mole or less, or 0.16 mole or more and 0.4 mole or less based on 1 mole of the repeating unit represented by Chemical Formula 3.

As the copolymer contains the repeating unit represented by Chemical Formula 2 in an amount of 0.9 mole or less based on 1 mole of the repeating unit represented by Chemical Formula 3, it is possible to exhibit excellent tensile elongation, and realize the effects of improving heat resistance and biodegradability and of improving moisture and gas barrier properties.

In addition, the copolymer may include a structure in which any one selected from the repeating unit represented by Chemical Formula 7 and the repeating unit represented by Chemical Formula 8 is bonded to both ends of the functional group represented by the following Chemical Formula 9. 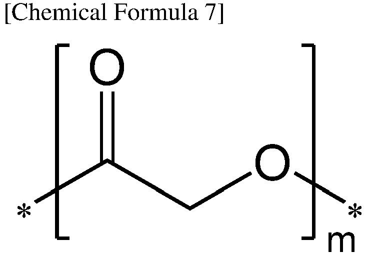 wherein, in Chemical Formula 7, m is an integer of 2 or more, 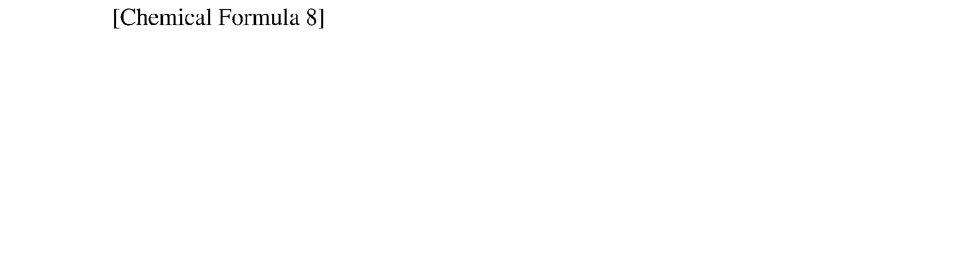 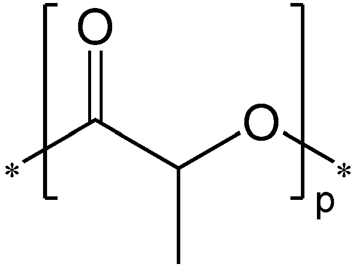 wherein, in Chemical Formula 8, p is an integer of 2 or more, and 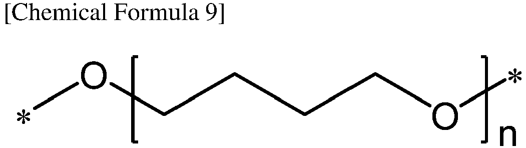 wherein, in Chemical Formula 9, n is an integer of 5 or more.

Specifically, the copolymer may include a structure in which the repeating unit represented by Chemical Formula 7 is bonded to both ends of the functional group of Chemical Formula 9, or a structure in which the repeating unit represented by Chemical Formula 8 is bonded to both ends of the functional group of Chemical Formula 9, or a structure in which the repeating unit represented by Chemical Formula 7 and the repeating unit represented by Chemical Formula 8 are bonded to both ends of the functional group of Chemical Formula 9, respectively.

More specifically, the copolymer may include any one selected from the repeating units represented by the following Chemical Formulas 10-1 to 10-3.

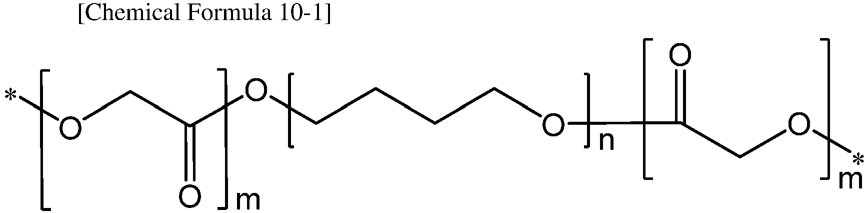

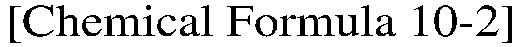

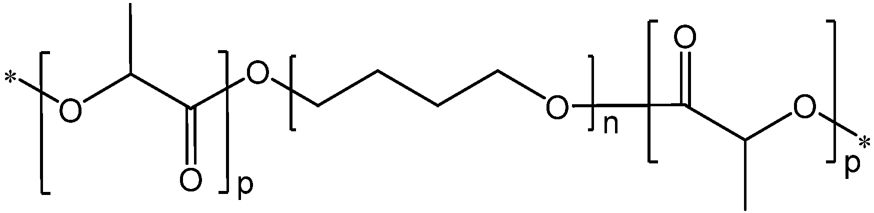

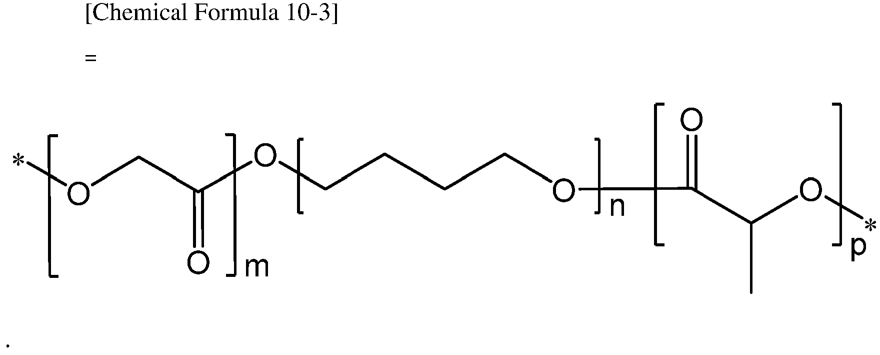

For example, the copolymer may include a copolymer represented by the following Chemical Formulas 11-1 to 11-3.

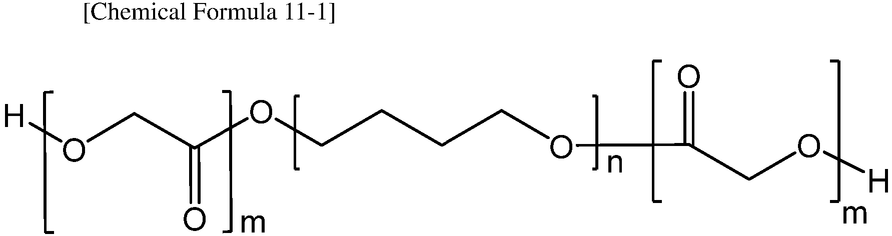

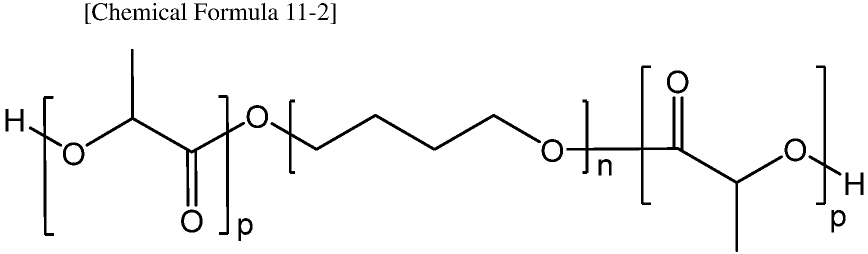

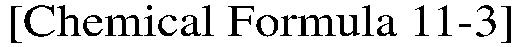

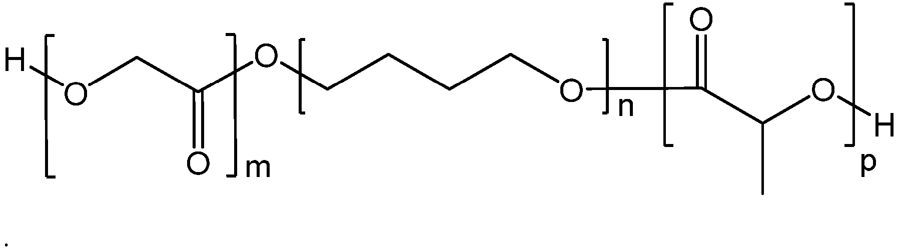

The copolymer may have a weight average molecular weight (Mw) of 10,000 g/mol or more and 500,000 g/mol or less, which is measured using a gel permeation chromatography (GPC).

Specifically, the copolymer may have a weight average molecular weight (Mw) of 10,000 g/mol or more, 15,000 g/mol or more, 20,000 g/mol or more, 30,000 g/mol or more, 35,000 g/mol or more, 500,000 g/mol or less, 400,000 g/mol or less, 300,000 g/mol or less, 200,000 g/mol or less, 100,000 g/mol or less, and 10,000 g/mol or more and 500,000 g/mol or less, 15,000 g/mol or more and 500,000 g/mol or less, 20,000 g/mol or more and 500,000 g/mol or less, 30,000 g/mol or more and 500,000 g/mol or less, 35,000 g/mol or more and 500,000 g/mol or less, 10,000 g/mol or more and 400,000 g/mol or less, 15,000 g/mol or more and 400,000 g/mol or less, 20,000 g/mol or more and 400,000 g/mol or less, 30,000 g/mol or more and 400,000 g/mol or less, 35,000 g/mol or more and 400,000 g/mol or less, 10,000 g/mol or more and 300,000 g/mol or less, 15,000 g/mol or more and 300,000 g/mol or less, 20,000 g/mol or more and 300,000 g/mol or less, 30,000 g/mol or more and 300,000 g/mol or less, 35,000 g/mol or more and 300,000 g/mol or less, 10,000 g/mol or more and 200,000 g/mol or less, 15,000 g/mol or more and 200,000 g/mol or less, 20,000 g/mol or more and 200,000 g/mol or less, 30,000 g/mol or more and 200,000 g/mol or less, 35,000 g/mol or more and 200,000 g/mol or less, 10,000 g/mol or more and 100,000 g/mol or less, 15,000 g/mol or more and 100,000 g/mol or less, 20,000 g/mol or more and 100,000 g/mol or less, 30,000 g/mol or more and 100,000 g/mol or less, or 35,000 g/mol or more and 100,000 g/mol or less, which are measured using a gel permeation chromatography (GPC).

The copolymer of one embodiment may be a biodegradable copolymer that exhibits biodegradability.

As used herein, a biodegradable resin or a biodegradable (co)polymer means a resin or (co)polymer that causes natural degradation when exposed to the outside. Specifically, it may refer to a resin or a (co)polymer that is degraded by 20% by weight or more based on the weight of the initial resin or (co)polymer when exposed to the external environment at room temperature (10°C to 30°C) for 30 days or more.

That is, the copolymer of the above embodiment may cause natural degradation when exposed to the outside, and specifically, may be degraded by more than 20% by weight when exposed to the external environment at room temperature (10°C to 30°C) for more than 30 days.

The method of measuring biodegradability is not particularly limited, but for example, the moisture content in aerobic compost is set to a level of 40% to 70% at room temperature (10°C to 30°C), the compost and a resin or a (co)polymer are then mixed at a weight ratio of 10:1, and measurement can be performed by calculating the ratio of the mass degraded into water and CO₂ based on the initial mass of the sample with the lapse of time.

According to another embodiment of the invention, there can be provided a method for preparing a copolymer, the method comprising subjecting a glycolide monomer and a monomer represented by the following Chemical Formula 5 to ring-opening polymerization in the presence of a compound represented by the following Chemical Formula 4 to prepare a copolymer, wherein the glycolide monomer is contained in an amount of 0.9 mole or less based on 1 mole of the repeating unit represented by Chemical Formula 5: 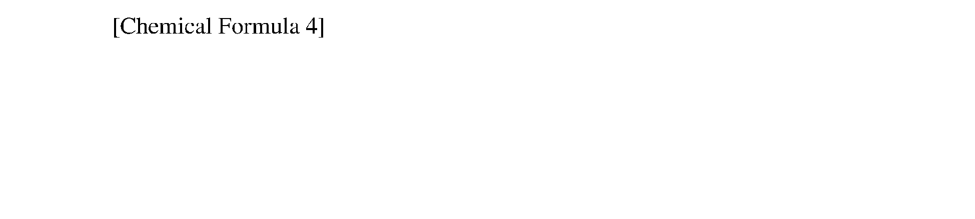 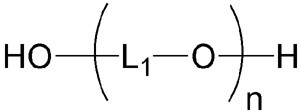 wherein, in Chemical Formula 4,
L₁ is an alkylene group having 4 or more carbon atoms, and
n is an integer of 5 or more, 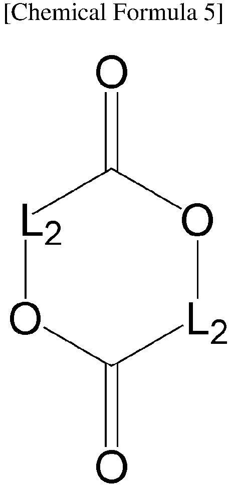
wherein, in Chemical Formula 5,
L₂ is an alkylene group having 2 or more carbon atoms.

In the method for preparing the copolymer, the compound represented by Chemical Formula 4 may be used as an initiator, and may also be included as a monomer in the final copolymer.

Specifically, in Chemical Formula 4, L₁ is an alkylene group having 4 or more carbon atoms, wherein the alkylene group may be substituted or unsubstituted.

Further, in Chemical Formula 4, n may be an integer of 5 or more and 5000 or less.

Specifically, in Chemical Formula 4, n may be an integer of 5 or more, 10 or more, or 5000 or less, 4000 or less, 3000 or less, 2000 or less, 1500 or less, 1000 or less, 500 or less, 100 or less, 50 or less, 40 or less, or may be an integer of 5 or more and 5000 or less, 5 or more and 4000 or less, 5 or more and 3000 or less, 5 or more and 2000 or less, 5 or more and 1500 or less, 5 or more and 1000 or less, 5 or more and 500 or less, 5 or more and 100 or less, 5 or more and 50 or less, 5 or more and 40 or less, 10 or more and 5000 or less, 10 or more and 4000 or less, 10 or more and 3000 or less, 10 or more and 2000 or less, 10 or more and 1500 or less, 10 or more and 1000 or less, 10 or more and 500 or less, 10 or more and 100 or less, 10 or more and 50 or less, or 10 or more and 40 or less.

Specifically, the compound represented by Chemical Formula 4 may include a compound represented by the following Chemical Formula 4-1. 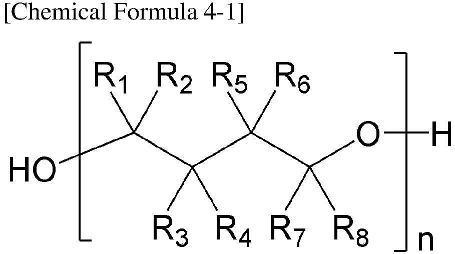 wherein, in Chemical Formula 4-1,
R₁ to R₈ are each independently hydrogen or an alkyl group, and n is an integer of 5 or more.

In the method for preparing the copolymer according to the above embodiment, the copolymer may include a repeating unit derived from the compound represented by Chemical Formula 4 in an amount of 5% by weight or more and 95% by weight or less based on the all repeating units.

The repeating unit derived from the compound represented by Chemical Formula 4 may be a repeating unit represented by Chemical Formula 1.

Specifically, the copolymer according to the above embodiment may include the repeating unit derived from the compound represented by Chemical Formula 4 in an amount of 5% by weight or more, 10% by weight or more, 15% by weight or more or 95% by weight or less, 90% by weight or less, 80% by weight or less, 75% by weight or less, 50% by weight or less, 5% by weight or more and 95% by weight or less, 5% by weight or more and 90% by weight or less, 5% by weight or more and 80% by weight or less, 5% by weight or more and 75% by weight or less, 5% by weight or more and 50% by weight or less, 10% by weight or more and 95% by weight or less, 10% by weight or more and 90% by weight or less, 10% by weight or more and 80% by weight or less, 10% by weight or more and 75% by weight or less, 10% by weight or more and 50% by weight or less, 15% by weight or more and 95% by weight or less, 15% by weight or more and 90% by weight or less, 15% by weight or more and 80% by weight or less, 15% by weight or more and 75% by weight or less, or 15% by weight or more and 50% by weight or less based on the all repeating units.

As the final copolymer prepared according to the method for preparing the copolymer of the above embodiment includes a repeating unit derived from the compound represented by Chemical Formula 4 in an amount of 5% by weight or more and 95% by weight or less based on the total repeating units, it is possible to simultaneously achieve excellent mechanical properties and elongation.

If the copolymer contains less than 5% by weight of the repeating unit represented by Chemical Formula 1 based on the total repeating units, the elongation is poor, which may limit the processability. If the repeating unit represented by Chemical Formula 1 is included in an amount of more than 95% by weight based on the total repeating units, the mechanical properties may deteriorate.

The molar content of the repeating unit derived from the compound represented by Chemical Formula 4 can be realized by adjusting the ratio of each monomer used in the copolymer of the above embodiment.

If the weight ratio of the compound represented by Chemical Formula 4 and the glycolide monomer is less than 1:99, the elongation is poor, which may limit the processability. If the weight ratio of the compound represented by Chemical Formula 4 and the glycolide monomer is greater than 99:1, the mechanical properties may deteriorate.

The compound represented by Chemical Formula 4 may have a weight average molecular weight (Mw) of 500 g/mol to 10,000 g/mol as measured using a gel permeation chromatography (GPC).

Specifically, the compound represented by Chemical Formula 4 may have a weight average molecular weight (Mw) of 500 g/mol or more, 700 g/mol or more, 800 g/mol or more, 1000 g/mol or more, 10,000 g/mol or less, 5000 g/mol or less, 2000 g/mol or less, 1500 g/mol or less, and 500 g/mol or more and 10,000 g/mol or less, 700 g/mol or more and 10,000 g/mol or less, 800 g/mol or more and 10,000 g/mol or less, 1000 g/mol or more and 10,000 g/mol or less, 500 g/mol or more and 5,000 g/mol or less, 700 g/mol or more and 5,000 g/mol or less, 800 g/mol or more and 5,000 g/mol or less, 1000 g/mol or more and 5,000 g/mol or less, 500 g/mol or more and 2,000 g/mol or less, 700 g/mol or more and 2,000 g/mol or less, 800 g/mol or more and 2,000 g/mol or less, 1000 g/mol or more and 2,000 g/mol or less, 500 g/mol or more and 1500 g/mol or less, 700 g/mol or more and 1500 g/mol or less, 800 g/mol or more and 1500 g/mol or less, or 1000 g/mol or more and 1500 g/mol or less, which are measured using a gel permeation chromatography (GPC).

The step of subjecting a glycolide monomer and a monomer represented by Chemical Formula 5 to ring-opening polymerization in the presence of a compound represented by Chemical Formula 4 to prepare a copolymer can be carried out by as a bulk polymerization substantially free from a solvent. At this time, substantially free from a solvent may include the use of a small amount of solvent for dissolving the catalyst, for example, up to less than 1 ml of the solvent per kg of the monomer used. As the of subjecting a glycolide monomer and a monomer represented by Chemical Formula 5 to ring-opening polymerization in the presence of a compound represented by Chemical Formula 4 to prepare a copolymer is carried out by as a bulk polymerization, it is possible to omit the step of removing the solvent after polymerization, and degradation or loss of resin during such a solvent removal process can also be suppressed.

Preferably, in the step of subjecting a glycolide monomer and a monomer represented by Chemical Formula 5 to ring-opening polymerization in the presence of a compound represented by Chemical Formula 4 to prepare a copolymer, the glycolide monomer may be included in an amount of 10 to 150 parts by weight based on 100 parts by weight of the compound represented by Chemical Formula 4.

Specifically, in the step of subjecting a glycolide monomer and a monomer represented by Chemical Formula 5 to ring-opening polymerization in the presence of a compound represented by Chemical Formula 4 to prepare a copolymer, the glycolide monomer may be contained in an amount of 10 parts by weight or more, 20 parts by weight or more, 50 parts by weight or more, 60 parts by weight or more, 150 parts by weight or less, 135 parts by weight or less, 10 parts by weight or more and 150 parts by weight or less, 20 parts by weight or more and 150 parts by weight or less, 50 parts by weight or more and 150 parts by weight or less, 60 parts by weight or more and 150 parts by weight or less, 10 parts by weight or more and 135 parts by weight or less, 20 parts by weight or more and 135 parts by weight or less, 50 parts by weight or more and 135 parts by weight or less, 60 parts by weight or more and 135 parts by weight or less based on 100 parts by weight of the compound represented by Chemical Formula 4.

When the glycolide monomer is contained in an amount of less than 10 parts by weight or more than 150 parts by weight based on 100 parts by weight of the compound represented by Chemical Formula 4, the elongation of the finally prepared copolymer may be poor, which may limit the processability or deteriorate the mechanical properties.

Meanwhile, the method for preparing the copolymer involves a ring-opening polymerization reaction of glycolide, and therefore, is carried out in the presence of a glycolide ring-opening catalyst. Preferably, the step of subjecting a glycolide monomer and a monomer represented by Chemical Formula 5 to ring-opening polymerization in the presence of a compound represented by Chemical Formula 4 to prepare a copolymer may be carried out in the presence of a catalyst represented by the following Chemical Formula 6.

[Chemical Formula 6] MA¹ₚA²₂₋ₚ

wherein, in Chemical Formula 6, M is Al, Mg, Zn, Ca, Sn, Fe, Y, Sm, Lu, Ti or Zr,
p is an integer of 0 to 2, and A¹ and A² are each independently an alkoxy group or a carboxyl group. For example, the catalyst represented by Chemical Formula 4 may be tin(II) 2-ethylhexanoate (Sn(Oct)₂).

Preferably, the method for preparing the copolymer is carried out at a temperature of 150°C to 200°C. Preferably, the preparation method is carried out for 5 minutes to 10 hours, more preferably for 10 minutes to 1 hour.

According to one embodiment of the invention, there can be provided a molded article molded from a resin composition comprising the above copolymer. The resin composition comprising the copolymer may further include other additives for improving the physical properties in addition to the copolymer.

The molded article may comprise one or more molded articles selected from the group consisting of injection-molded articles, extrusion-molded articles, inflation-molded articles, fibers, nonwoven fabrics, foaming body, films, and sheets.

The uses of the molded article are not particularly limited, but for example, the molded article may be an electronic material, a building material, a food packaging, a food container (disposable cup, tray, etc.), an industrial article, an agricultural article (e.g., mulching film), and the like.

### [Advantageous Effects]

According to the present invention, a copolymer having excellent biodegradability and improved elongation while maintaining the excellent mechanical properties inherent to polyglycolic acid, and a preparation method of the copolymer can be provided.

### [DETAILED DESCRIPTION OF THE EMBODIMENTS]

Hereinafter, the present invention will be explained in detail with reference to the following examples. However, these examples are for illustrative purposes only, and the scope of the present invention is not limited thereto.

### <Examples and Comparative Examples>

### Example 1

15 g (0.005 mol) of poly(tetramethylene ether) glycol (n=33, weight average molecular weight: 3000 g/mol), 10 g (0.086 mol) of glycolide and 75 g (0.52 mol) of lactide were added to a 500 mL Teflon-coated round flask, and the temperature was adjusted to room temperature.

After 39.3 mg of tin(II) 2-ethylhexanoate was added to the flask, the flask was placed in an oil bath, the temperature was raised to 220°C under a nitrogen atmosphere, and the mixture was subjected to ring-opening polymerization reaction while stirring at 200 rpm for 2 hours. After the reaction was completed, the remaining monomer was removed through a devolatilization step of the product to obtain the final copolymer.

### Example 2

A copolymer was prepared in the same manner as Example 1, except that in Example 1, 15 g (0.005 mol) of poly(tetramethylene ether) glycol (n=33, weight average molecular weight: 3000 g/mol), 20 g (0.17 mol) of glycolide, 65 g (0.45 mol) of lactide and 40.4 mg of tin(II) 2-ethylhexanoate were added.

### Comparative Example 1

A copolymer was prepared in the same manner as Example 1, except that in Example 1, 10 g (0.049 mol) of n-dodecanediol, 10 g (0.086 mol) of glycolide and 1.09 mg of tin(II) 2-ethylhexanoate were added.

### Comparative Example 2

A copolymer was prepared in the same manner as Example 1, except that in Example 1, 15 g (0.005 mol) of poly(tetramethylene ether) glycol (n=33, weight average molecular weight: 3000 g/mol), 38 g (0.33 mol) of glycolide, 47 g (0.33 mol) of lactide and 42.3 mg of tin(II) 2-ethylhexanoate were added.

### Reference Example 1

A copolymer was prepared in the same manner as Example 1, except that in Example 1, 15 g (0.005 mol) of poly(tetramethylene ether) glycol (n=33, number average molecular weight: 3000 g/mol), 10 g (0.007 mol) of glycolide, 75 g (0.07 mol) of lactide, and 0.066 mg of tin(II) 2-ethylhexanoate were added.

### Evaluation

### (1) GPC (Gel Permeation Chromatography) analysis

The weight average molecular weight (Mw) of the copolymers of Examples, Comparative Examples and Reference Example was measured using a gel permeation chromatography (GPC, Waters E2640).

Specifically, the copolymers of Examples, Comparative Examples and Reference Example were respectively dissolved in HFIP(hexafluoro isopropanol) to a concentration of 2 mg/ml, and then 20 *µ*ℓ of the dissolved solution was injected into GPC. HFIP was used as the mobile phase for GPC, the flow rate was 1.0 mL/min, and GPC analysis was carried out at 40°C. The column was two Agilent Mixed-B units connected in series. RI Detector was used as a detector. The values of Mw was obtained using a calibration curve formed using poly methyl methacrylate (PMMA). Nine kinds of the polystyrene standard samples were used with the weight average molecular weight of 2,000 g/mol, 10,000 g/mol, 30,000 g/mol, 70,000 g/mol, 200,000 g/mol, 700,000 g/mol, 2,000,000 g/mol, 4,000,000 g/mol, and 10,000,000 g/mol.

### (3) Evaluation of physical properties

The tensile strength, Young's modulus, and tensile elongation of the copolymers of Examples, Comparative Examples, and Reference Example were measured.

Specifically, the evaluation was conducted according to ASTM D638. ASTM D536 V Type specimens were produced at 190°C to 200°C using a hot-press device (Limotem QM900S), and then measured at a load of 10 mm/s and 60 kg/f using a UTM device (Universal Testing Machine).

**[Table 1]**

| | Number average molecular weight (g/mol) | Tensile strength (MPa) | Young's modulus (MPa) | Tensile elongation (%) |
|---|---|---|---|---|
| Example 1 | 45000 | 30.4 | 586 | 131.7 |
| Example 2 | 45000 | 28.9 | 612 | 106.6 |
| Comparative Example 1 | 40000 | 110 | 3.2 | 25 |
| Comparative Example 2 | 43000 | 24.8 | 694 | 63.4 |
| Reference Example 1 | 3000 | Sample production impossible | Sample production impossible | Sample production impossible |

According to Table 1, it was confirmed that the copolymers of Examples 1 and 2 exhibited a tensile elongation of 106.6% or more, so that the elongation was ensured, which made it possible to measure the physical properties by thermoforming and processing. It could also be confirmed that the physical properties and processability were improved compared to the existing polyglycolic acid.

On the other hand, it could be confirmed that the copolymer of Comparative Example 1 exhibited a tensile elongation of 25%, and the copolymer of Comparative Example 2 exhibited a tensile elongation of 63.4%, showing that the tensile elongation was poor compared to Examples.

In addition, it was confirmed that the copolymer of Reference Example 1 caused degradation during specimen preparation and was fractured due to high crystallinity and low elongation, thus making it impossible to prepare specimens. Accordingly, it was confirmed that thermoforming and processing were not possible.

### (4) Measurement of biodegradation degree

The biodegradation degree of cellulose, which is a standard material, and the copolymers of Examples was measured under home composting conditions of EN17427.

Specifically, under home composting conditions (28°C, aerobic compost conditions), the moisture content in the compost was set to 50%, and then the compost and the polymer were mixed at a weight ratio of 10: 1 to measure the CO₂ generated. The degradation (%) refers to a value obtained by calculating the mass degraded into water and CO₂ based on the initial mass of the sample. In addition, for comparison, the results were compared with the biodegradation measurement results of cellulose (Sigma Aldrich, Cellulose, Cat. No. 310697), which is a standard substance.

As a result of degradation measurement of the copolymers of Examples 1 and 2, it could be confirmed that the copolymers was degraded by about 40% or more, and cellulose was degraded by about 60% in the same time. It was confirmed that the biodegradation degree of Example 1 increased with the lapse of time compared to the biodegradation degree of cellulose. Through this, it was confirmed that the block copolymers of Examples 1 and 2 had biodegradable properties even under relatively mild home composting conditions.

## Claims

1. A copolymer comprising a repeating unit represented by the following Chemical Formula 1, a repeating unit represented by the following Chemical Formula 2, and a repeating unit represented by the following Chemical Formula 3,
wherein the repeating unit represented by Chemical Formula 2 is contained in an amount of 0.9 mole or less based on 1 mole of the repeating unit represented by Chemical Formula 3: 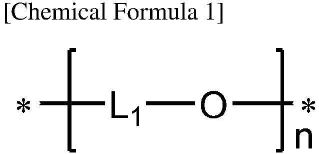 wherein, in Chemical Formula 1,
L₁ is an alkylene group having 4 or more carbon atoms, and
n is an integer of 5 or more, 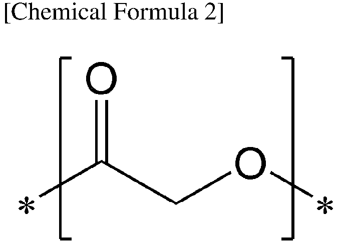 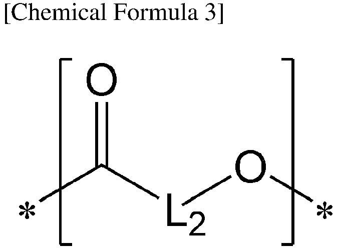
wherein, in Chemical Formula 3, L₂ is an alkylene group having 2 or more carbon atoms.

2. The copolymer of claim 1, wherein:
the copolymer comprises 5% by weight or more and 95% by weight or less of the repeating unit represented by Chemical Formula 1 based on the total repeating units.

3. The copolymer of claim 1, wherein:
the repeating unit represented by Chemical Formula 1 comprises a repeating unit represented by the following Chemical Formula 1-1: 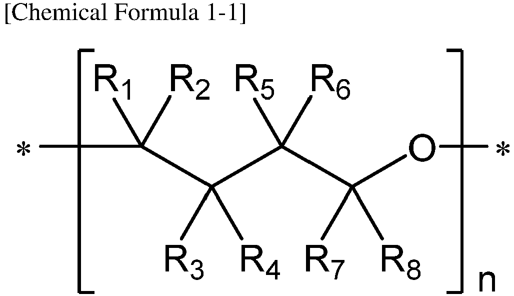 wherein, in Chemical Formula 1-1,
R₁ to R₈ are each independently hydrogen or an alkyl group, and
n is an integer of 5 or more.

4. The copolymer of claim 1, wherein:
in Chemical Formula 1, n is an integer of 5 or more and 5000 or less.

5. The copolymer of claim 1, wherein:
the repeating unit represented by Chemical Formula 2 is contained in an amount of 1.1 mole or more based on 1 mole of the repeating unit represented by Chemical Formula 1.

6. The copolymer of claim 1, wherein:
the copolymer comprises a repeating unit represented by the following Chemical Formula 7: 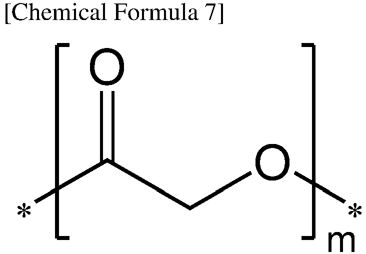 wherein, in Chemical Formula 7,
m is an integer of 2 or more.

7. The copolymer of claim 1, wherein:
the copolymer comprises a repeating unit represented by the following Chemical Formula 8: 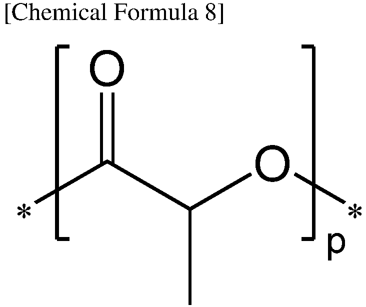 wherein, in Chemical Formula 8,
p is an integer of 2 or more.

8. The copolymer of claim 1, wherein:
the copolymer comprises a structure in which any one selected from a repeating unit represented by the following Chemical Formula 7 and a repeating unit represented by the following Chemical Formula 8 is bonded to both ends of the functional group represented by the following Chemical Formula 9: 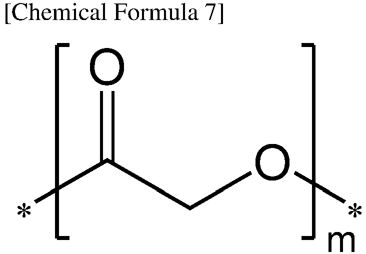 wherein, in Chemical Formula 7,
m is an integer of 2 or more, 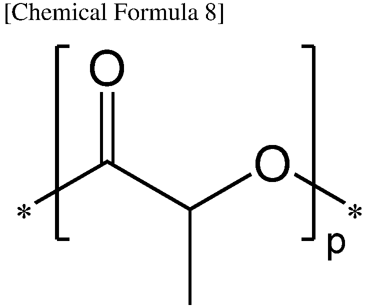 wherein, in Chemical Formula 8,
p is an integer of 2 or more. 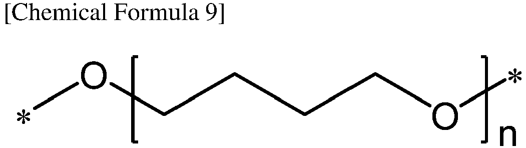 wherein, in Chemical Formula 9,
n is an integer of 5 or more.

9. The copolymer of claim 1, wherein:
the copolymer has a weight average molecular weight of 10,000 g/mol or more and 500,000 g/mol or less.

10. A method for preparing a copolymer, the method comprising subjecting a glycolide monomer and a monomer represented by the following Chemical Formula 5 to ring-opening polymerization in the presence of a compound represented by the following Chemical Formula 4 to prepare a copolymer,
wherein the glycolide monomer is contained in an amount of 0.9 mole or less based on 1 mole of the repeating unit represented by Chemical Formula 5: 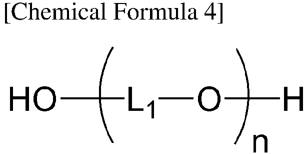 wherein, in Chemical Formula 4,
L₁ is an alkylene group having 4 or more carbon atoms, and
n is an integer of 5 or more, 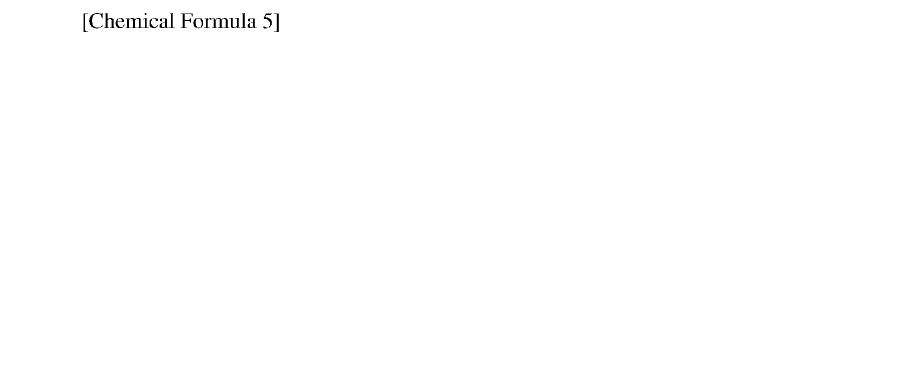 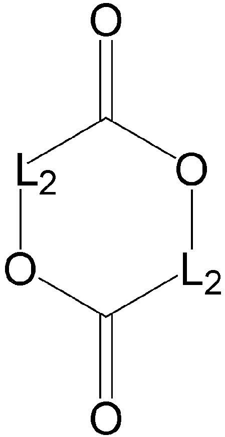
wherein, in Chemical Formula 5,
L₂ is an alkylene group having 2 or more carbon atoms.

11. The method for preparing a copolymer according to claim 10, wherein:
the compound represented by Chemical Formula 4 has a weight average molecular weight of 500 g/mol to 10,000 g/mol.

12. The method for preparing a copolymer according to claim 10, wherein:
the glycolide monomer is contained in an amount of 10 parts by weight or more and 150 parts by weight or less based on 100 parts by weight of the compound represented by Chemical Formula 4.

13. The method for preparing a copolymer according to claim 10, wherein:
the subjecting a glycolide monomer and a monomer represented by Chemical Formula 5 to ring-opening polymerization in the presence of a compound represented by Chemical Formula 4 to prepare a copolymer is carried out in the presence of a catalyst represented by the following Chemical Formula 6:
[Chemical Formula 6] MA¹ₚA²₂₋ₚ
wherein, in Chemical Formula 6,
M is Al, Mg, Zn, Ca, Sn, Fe, Y, Sm, Lu, Ti or Zr,
p is an integer of 0 to 2, and
A₁ and A₂ are each independently an alkoxy group or a carboxyl group.

14. The method for preparing a copolymer according to claim 13, wherein:
the catalyst is tin(II) 2-ethylhexanoate.

15. A molded article molded from a resin composition comprising the copolymer of claim 1.

16. The molded article according to claim 15, the molded article comprises one or more molded articles selected from the group consisting of injection-molded articles, extrusion-molded articles, inflation-molded articles, fibers, nonwoven fabrics, foaming body, films, and sheets.
